# EUROPEAN PATENT SPECIFICATION

(11) **EP 0 469 821 B1**
(45) Date of publication and mention of the grant of the patent: **30.11.1994**
(21) Application number: 91306914.2
(22) Date of filing: 29.07.1991
(51) Int. Cl.: H02M 3/335, H02M 3/338, H02M 3/28, H04N 3/185

(54) **Switch mode power supply**
Schaltnetzteil
Alimentation à découpage

(30) Priority: 03.08.1990 JP 205273/90
(43) Date of publication of application: 05.02.1992
(73) Proprietor: International Business Machines Corporation, Armonk, N.Y. 10504 (US)
(72) Inventor: Kobayashi, Masaki, Machida-shi, Tokyo-to (JP); Mori, Masaki, Ebina-shi, Kanagawa-ken (JP); Morimoto, Norishige, Setagaya-ku, Tokyo-to (JP)
(74) Representative: Burt, Roger James, Dr.

(56) References cited:
- IBM TECHNICAL DISCLOSURE BULLETIN. vol. 29, no. 11, April 1987, NEW YORK US pages 4948 - 4949; 'SWITCHED POWER SUPPLY SYNCHRONIZED TO DISPLAY'
- IBM TECHNICAL DISCLOSURE BULLETIN. vol. 29, no. 9, February 1987, NEW YORK US pages 3921 - 3922; 'SWITCHED POWER SUPPLY FOR CRT DISPLAY'

## Description

The present invention relates to a switch mode power supply for a multi-frequency display system wherein plural horizontal synchronous pulse trains of different frequencies are used to support plural multi-display modes.

Generally, a switch mode power supply is used to provide a stabilised DC power supply in a CRT display device for a personal computer workstation. Such power supplies are usually mounted within a space in the display device. However, this can produce objectionable problems, jitter or beating noise on the display because of interference between the frequency of the horizontal scan signal of the CRT display caused by a magnetic flux leakage from a transformer of the power supply.

In some conventional CRT displays the horizontal deflection circuit of the CRT is magnetically separated from the power supply by a shield.

In some conventional CRT displays the horizontal deflection frequency is synchronized to the switching frequency, as shown in "Switch mode power supply for CRT display," IBM Technical Disclosure Bulletin. Vol. 29, No. 9, February 1987, pp. 3921-3922. In the former article, the switch mode power supply is normally run at a multiple of horizontal scan frequency. In the latter article, the switch mode power supply operate scan horizontal scan frequency.

The latter article discloses a switch mode power supply comprising: an automatic frequency control circuit (AFC) including an oscillator for generating a drive signal and a synchronous circuit for locking the drive signal to an input synchronisation (sync) signals when integer multiples of the respective frequencies of the sync signal are within a pull-in range of a centre frequency of the oscillator, the drive signal, when locked to the sync signal, having a frequency which is an integer multiples of the frequency of the sync signal; a drive circuit for generating a switching signals in response to the drive signal; and a switching regulator for generating one or more regulated power supply output voltages in response to the switching signal.

Japanese patent application 63-294727 discloses a power supply in which inputs of first and second switching regulators are commonly connected to DC bulk voltage output of a rectifying and smoothing circuit. The second switching regulator operates at a switching frequency which is N times larger than or 1/N times smaller than switching frequency of the first switching regulator (N is integer larger than 1).

Multi-frequency type CRT display devices can operate in plural display modes of different horizontal scan frequencies such as, 31 KHz, 48 KHz, etc. to support various character display modes. In some multi-frequency type display devices, the horizontal scan frequencies and the switching frequency of the power supply device are independent from each other, and the shield for magnetically isolating both the circuits is used. In other multifrequency type display devices, the switching frequency of the power supply is synchronised to a multiple of horizontal scan frequency. The multiple is used to permit high efficiency and reduced size of the power supply. For horizontal scan frequencies, of 31 KHz and 48 KHz, the switching frequencies are 93 KHz (= 31 KHz x 3) and 144 KHz (=48 KHz x 3). The power supply must therefore operate within a frequency range of 51 KHz (= 144 - 93 KHz). Generally, the switching frequency of the power supply is determined by the following typical circuit parameters. Core size of a switching transformer, switching speed range of a rectifying diode capacitance and size of a smoothing capacitor, and design of heat sink for circuit components.

In practice, in the design of the power supply device covering the wide frequency range 53 KHz, it is difficult to optimise these design parameters to provide a wide operational frequency range such as 53 KHz.

In accordance with the present invention, there is now provided a switch mode power supply comprising: an automatic frequency control circuit (AFC) including an oscillator for generating first and second drive signals and a synchronous circuit for locking the first and second drive signals respectively to first and second input synchronisation (sync) signals when integer multiples of the respective frequencies of the first and second sync signals are within a pull-in range of a centre frequency of the oscillator, the first and second drive signals, when locked to the first and second sync signals, having frequencies which are integer multiples of the respective frequencies of the first and second sync signals; a drive circuit for generating first and second switching signals in response to the first and second drive signals respectively; and a switching regulator for generating one or more regulated power supply output voltages in response to the first and second switching signals; characterised in that the power supply comprises a control circuit for selecting, during a test period, the centre frequency of the oscillator such that, during subsequent operation of the power supply, the frequency range occupied by the first and second drive signals is narrower than the frequency range occupied by the first and second sync signals, the control circuit including: means for increasing the oscillator frequency through integer multiples of the frequencies of the first and second sync signals; a frequency detecting circuit for determining the start frequencies at which the AFC locks to the first and second sync signals as the oscillator frequency is increased; means for determining the end frequencies at which the AFC unlocks from the first and second sync signals as the oscillator frequency is increased; means for selecting different groups each containing determined start and end frequencies corresponding to the first and second sync signals; means for determining the lowest end frequency and the highest start frequency in each group; means for subtracting the highest start frequency from the lowest end frequency in each group to generate a frequency range corresponding to each group; means for determining the broadest positive range from the generated frequency ranges; and means for setting the centre frequency of the oscillator to the frequency intermediate between the lowest end frequency and the highest start frequency corresponding to the broadest positive range.

Because this switch mode power supply can operate within a narrower range of frequencies, the selection of circuit parameters, such as transformer core size, diode switching speed, smoothing capacitor capacitance, and heatsink size, is simplified. Furthermore, because the narrower range of frequencies includes higher frequencies, this power supply offers a significant improvement in efficiency.

Viewing the present invention from a second aspect, there is provided a method for operating a switch mode power supply, the method comprising: generating first and second drive signals using an oscillator; locking the first and second drive signals respectively to first and second input synchronisation (sync) signals when integer multiples of the respective frequencies of the first and second sync signals are within a pull-in range of a centre frequency of the oscillator, the first and second drive signals, when locked to the first and second sync signals, having frequencies which are integer multiples of the respective frequencies of the first and second sync signals; generating first and second switching signals in response to the first and second drive signals respectively; generating one or more regulated power supply output voltages in response to the first and second switching signals; and selecting, during a test period, the centre frequency of the oscillator such that, during subsequent operation of the power supply, the frequency range occupied by the first and second drive signals is narrower than the frequency range occupied by the first and second sync signals, by increasing the oscillator frequency through integer multiples of the frequencies of the first and second sync signals, determining the start frequencies at which the first and second drive signals lock to the first and second sync signals as the oscillator frequency is increased; determining the end frequencies at which the first and second drive signals unlock from the first and second sync signals as the oscillator frequency is increased; selecting different groups each containing determined start and end frequencies corresponding to the first and second sync signals; determining the lowest end frequency and the highest start frequency in each group; subtracting the highest start frequency from the lowest end frequency in each group to generate a frequency range corresponding to each group; determining the broadest positive range from the generated frequency ranges; and setting the centre frequency of the oscillator to the frequency intermediate between the lowest end frequency and the highest start frequency corresponding to the broadest positive range.

Viewing the present invention from a third aspect there is provided power supply apparatus comprising: first means for selectively generating at least two horizontal synchronous pulse trains of different frequencies; second means connected to said first means for generating a first switching pulse train of a frequency of which is N times as large as the frequency of horizontal synchronous pulse train (N is a positive integer) and second switching pulse train of a frequency which is M times as large as the frequency of the other horizontal synchronous pulse train (M is a positive integer), with said N and M being selected to provide the narrowest switching frequency range; and power supply means of switching regulator type connected to said second means, which operates in a switching frequency range defined by said first and second switching pulse trains.

The first means is preferably a display control circuit which selectively generates the first horizontal synchronous pulse train of the first frequency and the second horizontal synchronous pulse train of second frequency. The second means preferably includes an oscillator circuit for generating sawtooth waveform of a predetermined frequency, and a synchronous circuit receiving said sawtooth waveform and one of said first and second horizontal synchronous pulse train to modify said predetermined frequency to frequency which is N times as large as the frequency of first horizontal synchronous pulse train or frequency which is M times as large as the frequency of the second horizontal synchronous pulse train.

Viewing the present invention from a fourth aspect, there is provided power supply apparatus comprising first means for selectively generating one of plural horizontal synchronous pulse trains of different frequencies; frequency decision means for responding to information which indicates said frequencies of plural horizontal synchronous pulse trains, to select the broadest frequency range into which all the plural horizontal synchronous pulse trains can be synchronized, and to decide a basic frequency included in said narrowest frequency range; second means operating at said basic frequency and responding to one of said frequencies of plural horizontal synchronous pulse trains to generate one of plural switching pulse trains which are equal to multiples of said frequencies of plural horizontal synchronous pulse trains, respectively; and power supply means of switching regulator type connected to said second means, which operates in a switching frequency range defined by said frequencies equal to said multiples.

The frequency decision means preferably includes an oscillator circuit varying a frequency of sawtooth waveform, a synchronous circuit connected to said oscillator circuit and receiving one of said plural horizontal synchronous pulse trains of different frequencies, and a frequency detecting circuit connected to said oscillator circuit and said synchronous circuit for detecting plural sets of frequencies, each set of which includes lock start frequency, lock frequency and lock end frequency, as said frequency of sawtooth waveform is being varied.

In a preferred embodiment of the present invention, the frequency decision means includes a control device which controls to generate said plural sets of frequencies for each horizontal synchronous pulse train, and compares the sets of frequencies detected at said plural horizontal synchronous pulse train to select the broadest frequency range into which all the plural horizontal synchronous pulse trains can be synchronized.

A preferred embodiment of the present invention will now be described, by way of example only, with reference to the accompanying drawings in which:
Figure 1 shows the circuit block diagram of the power supply apparatus in accordance with the present invention;
Figure 2 shows the waveforms at the various connecting points of the circuit shown in the Figure 1;
Figure 3 shows the flow chart of the operation performed by the circuit shown in the Figure 1;
Figure 4 shows the contents of Table 6A;
Figure 5 shows the outputs of the AFC;
Figures 6 and 7 show the contents of Tables 6B and 6C;
Figure 8 shows the basic sawtooth waveform and various modified sawtooth waveforms generated by the AFC; and
Figure 9 shows the details of the frequency detecting circuit.

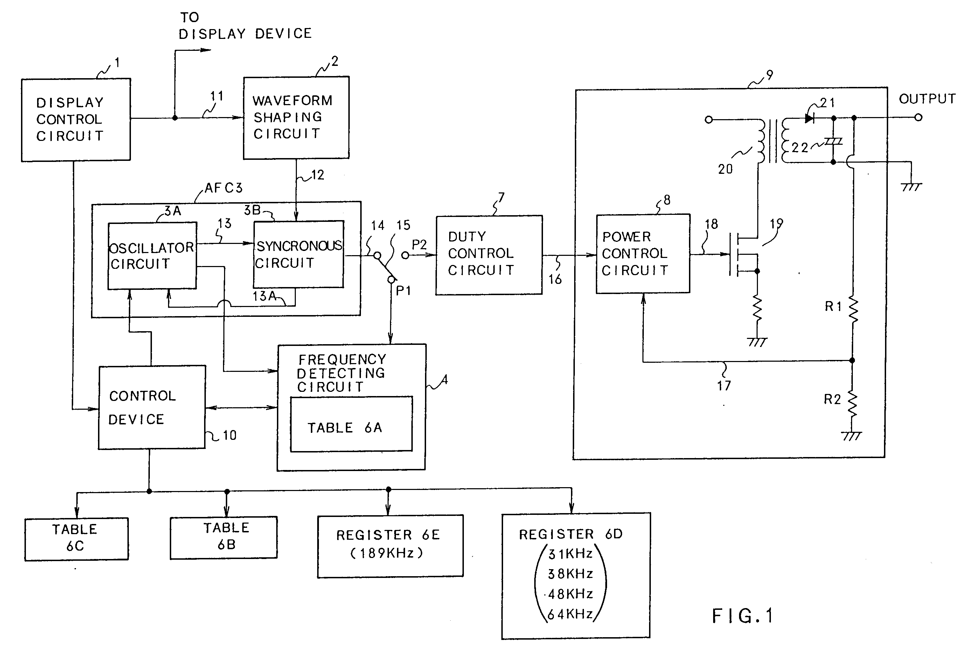

Figure 1 shows display apparatus comprising an example of a power supply of the present invention. A display control circuit 1 is included in a personal computer. The personal computer can operate in one of plural character display modes requiring, for example, 640 dots/one horizontal line, 1056 dots/one horizontal line, 1280 dots/one horizontal line. A multi scan frequency type CRT display device is connected to the personal computer for displaying the plural character display modes.

The circuit blocks except the display control circuit 1 in Figure 1 represent the power supply of the present invention. The power supply is mounted in a space within the CRT display device together with a horizontal deflection circuits, a flyback transformer, and other analog circuit, not shown.

The display control circuit 1 is designed to respond to a signal indicating one of character display modes to generate a horizontal sync pulse train of frequencies, such as 31 KHz, 38 KHz, 48 KHz or 64 KHz, vertical sync pulse trains, and video signals of characters or images to be displayed on the CRT display device.

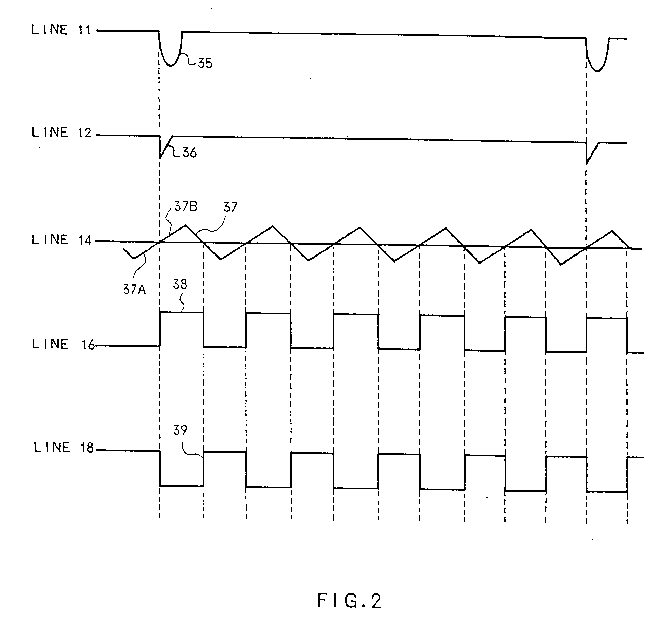

The horizontal synchronous pulse train of the selected frequency is supplied to a waveform shaping circuit 2 through a line 11. The horizontal sync pulse train 35 on the line 11 is shown in Figure 2. The waveform shaping circuit 2 generates pulses 36 on line 12, as shown in Figure 2. An automatic frequency control circuit (AFC) 3 includes an oscillator circuit 3A and a synchronous circuit 3B. A sawtooth waveform of a predetermined frequency generated by the oscillator circuit 3A is modified to a sawtooth waveform 37 of a frequency which is equal to a multiple of the frequency of the horizontal sync pulse train applied to the synchronous circuit 3B. The synchronous circuit 3B generates a feedback signal on a line 13A to equalise lower half 37A of a positive-going portion of the sawtooth waveform 37, which is separated by a leading edge of the pulse 36, from an upper half 37B of the portion.

The AFC 3 responds to the pulses 36 on the line 12 to lock or synchronize the frequency of the sawtooth waveform at the frequency of the horizontal synchronous pulse train, as shown by the wave form 37.

When switch 15 is connected to a position P2 in the Figure 1, a duty control circuit 7 receives the waveform 37 to generate pulse train 38, as shown in the Figure 2 on a line 16.

A power control circuit 8 in a switching regulator 9 receives the pulses 38 on the line 16 and a feedback signal on line 17 to generate switching pulses on line 18. A switching element, such as a switching transistor, 19 is controlled by the pulses on line 18. The operation of the power control circuit 8, switching transistor 19, transformer 20, diode 21, capacitor 22, and resistors R1 and R2 is well known in the art.

Circuit blocks 1, 2, 7 and 9 are also well known in the art. Circuit blocks 3, 4, 6 and 10 are connected between the waveform shaping circuit 2 and the duty control circuit 7 in accordance with the present invention.

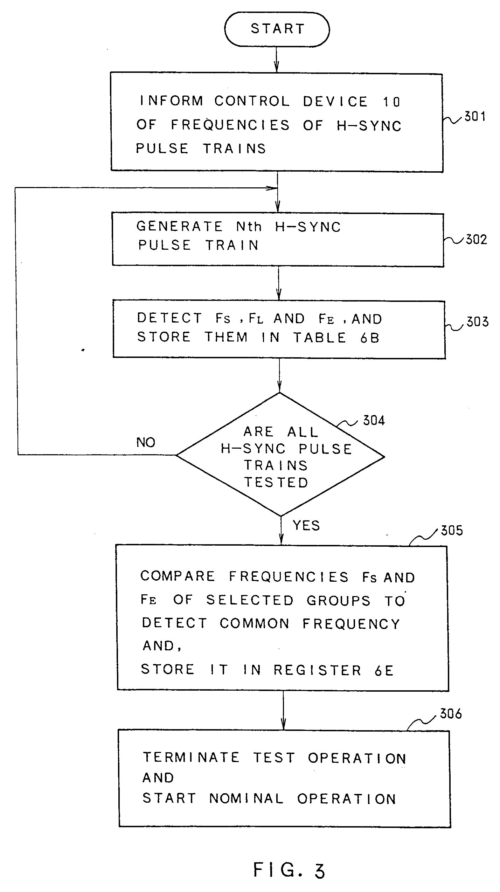

During an initial set-up period, the control device 10 positions switch 15 to position P1, and requests from the display control circuit 1 a list of the frequencies of horizontal sync (H-SYNC) pulse trains, i.e. 31 KHz, 38 KHz, 48 KHz and 64 KHz, supported by the display control circuit 1. The display control circuit 1 informs the control device 10 of the frequencies and these frequencies are stored in a register 6D, as shown by block 301 in Figure 3.

The operation proceeds to block 302 wherein the control device 10 generates frequency values represented by the formulas;
31 KHz x K
38 KHz x K
48 KHz x K
64 KHz x K (wherein K is positive integer)

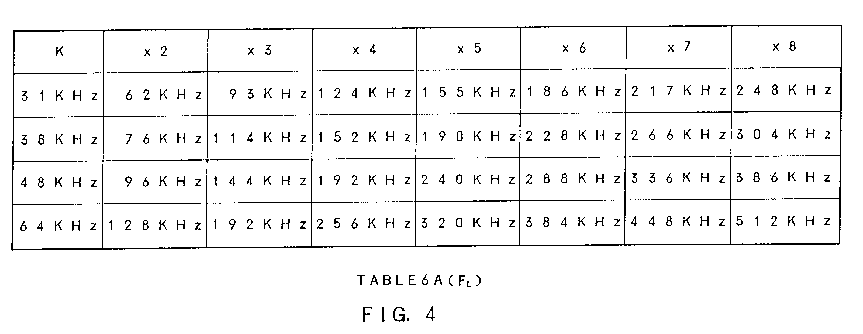

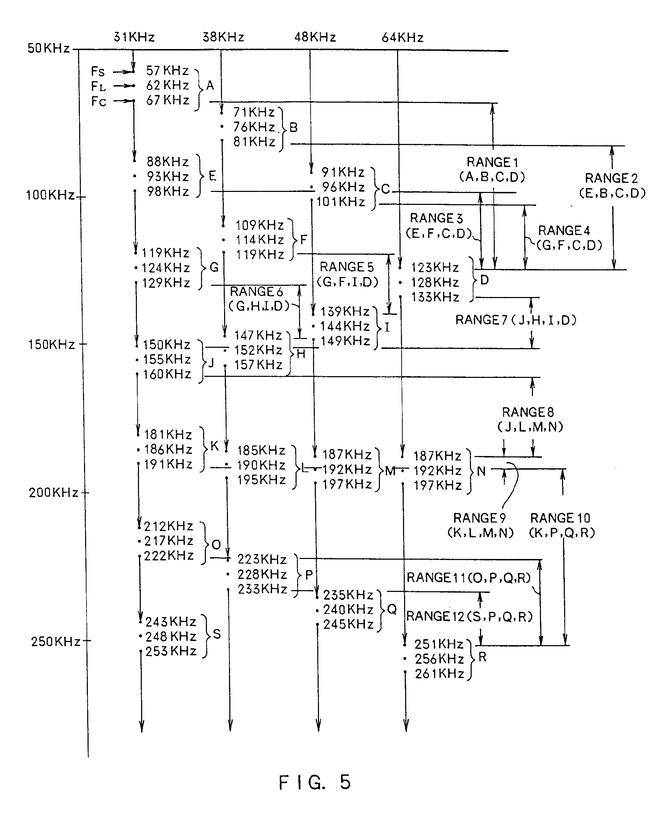

The control device 10 stores the calculated values in a table 6A in the frequency detecting circuit 4, as shown in Figure 4. The control device 10 then causes the display control circuit 1 to generate Nth, i.e. the first 31 KHz in this case, horizontal synchronous pulse train on the line 11, and causes the variable frequency oscillator circuit 3A to generate the sawtooth waveform in the frequency range of 30 KHz - 280 KHz, for example. The sawtooth waveform, the frequency of which is gradually increased from 30 KHz, is supplied to the synchronous circuit 3B through the line 13. The horizontal sync pulse train of 31 KHz is also supplied to the circuit 3B. The output of the AFC 3 is shown in Figure 5. As the frequency of the sawtooth waveform from the oscillator circuit 3A is increased beyond 57 KHz, the AFC 3 synchronizes its oscillating frequency to 62 KHz which is twice the horizontal scan frequency. The output frequency of the AFC 3 is locked to 62 KHz since the pull-in range in this example is set to ± 5 KHz.
The output frequency is released before 67 KHz. For the purpose of explanation, hereinafter, the 57 KHz frequency is called a lock start frequency F_{S}, the 62 KHz frequency is called as a lock frequency F_{L}, and the 67 KHz frequency is called a lock end frequency F_{E}.

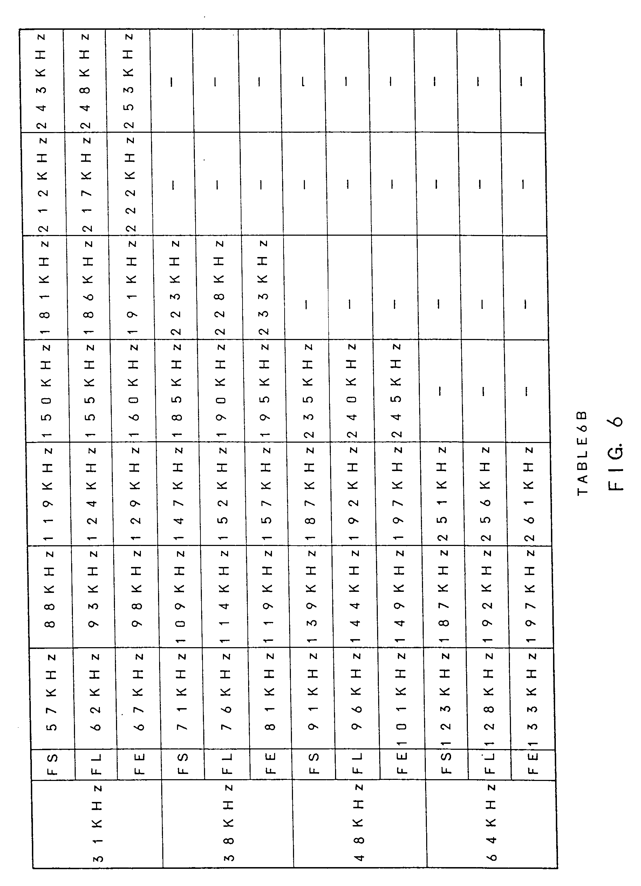

As the frequency of the sawtooth waveform is further increased from the 67 KHz, the frequency locks at 93 KHz, 124 KHz, 155 KHz, 186 KHz, 217 KHz and 248 KHz, as shown in the Figure 5. In a block 303 in Figure 3, the frequencies F_{S}, F_{L} and F_{E} for each locked frequency are detected by the frequency detecting circuit 4 and are supplied to the control device 10, which stores them in table 6B, as shown in Figure 6.

The operation proceeds to block 304 in Figure 3, wherein the control device 10 checks as to whether or not all the frequencies of the horizontal synchronous pulse train have been tested. If not, the operation is returned to block 302 wherein the control device 10 causes the display control circuit 1 to generate the second horizontal scan frequency 38 KHz. In the same manner as that of the 31 KHz case, the frequencies F_{S}, F_{L} and F_{E} are detected by the frequency detecting circuit 4 and the detected values are stored in the table 6B, as shown in the Figure 6. In this manner, the frequencies F_{S}, F_{L} and F_{E} for the horizontal synchronous frequencies 48 KHz and 64 KHz are detected and stored in the table 6B.

After the frequencies F_{S}, F_{L} and F_{E} for the last horizontal scan frequency 64 KHz have been stored in the table 6B, the operation proceeds to block 305 in Figure 3. The control device 10 selects a group of values corresponding to the horizontal scan frequencies 31 KHz, 38 KHz, 48 KHz and 64 KHz, and compares corresponding groups of lock start and end frequencies F_{S} and to detect a common or basic frequency in the selected group.

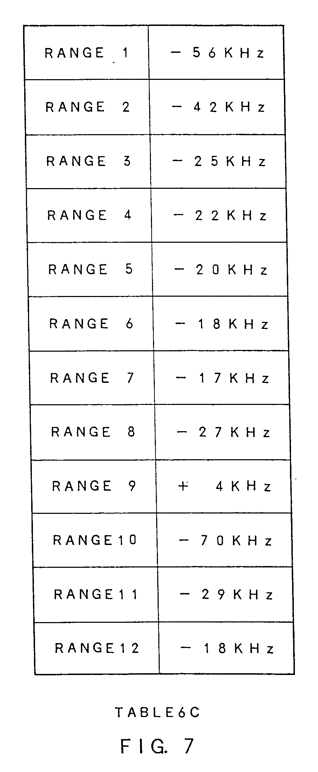

Referring to the Figure 5, the control device 10 initially selects values A, B, C and D as the first group and compares the corresponding lock end frequencies 67 KHz, 81 KHz, 101 KHz and 133 KHz to select the lowest lock end frequency 67 KHz, then, the corresponding lock start frequencies 57 KHz, 71 KHz, 91 KHz and 123 KHz are compared to select the highest lock start frequency 123 KHz. The difference produced by subtracting the maximum lock start frequency (F_{S} max) 123 KHz from the minimum lock end frequency (F_{E} min) 67 KHz, -56KHz, is stored in frequency range 1 of table 6C in Figure 7.

Control device 10 then selects the values E, B, C and D as the second group and compares the corresponding lock end frequencies 98 KHz, 81 KHz, 101 KHz and 133 KHz to select the lowest lock end frequency 81 KHz; The corresponding lock start frequencies 88 KHz, 71 KHz, 91 KHz and 123 KHz are compared to to select the highest lock start frequency 123 KHz. The value - 42 KHz = 81 KHz (F_{E} min) - 123 KHz (F_{S} max) is stored in range 2 of the Table 6C shown in Figure 7.

Control device 10 then selects the values E, F, C and D as the third group and compares the corresponding lock end frequencies 98 KHz, 119 KHz, 101 KHz and 133 KHz to select the lowest lock end frequency 98 KHz. The corresponding lock start frequencies 88 KHz, 109 KHz, 91 KHz and 123 KHz are compared to select the highest lock start frequency 123 KHz; The value -25 KHz, between the lowest lock end frequency 98 KHz and the highest lock start frequency 123 KHz is stored in range 3 table 6C in the Figure 7.

In this manner, the control device 10 sequentially calculates the values of the following ranges and stores them in table 6C in the Figure 7.
Range 4 (-22 KHz): Values G, F, C and D
Range 5 (-20 KHz): Values G, F, I and D
Range 6 (-18 KHz): Values G, H, I and D
Range 7 (-17 KHz): Values J, H, I and D
Range 8 (-27 KHz): Values J, L, M and N
Range 9 (+4 KHz) : Values K, L, M and N
Range 10 (-70 KHz): Values K, P. Q and R
Range 11 (-29 KHz): Values O, P, Q and R
Range 12 (-18 KHz): Values S, P, Q and R

Control device 10 compares the values of the frequency ranges 1 through 12 in the table 6C in the Figure 7 and selects the range 9 which has the positive maximum value 4 KHz. The broadest range 9 in this case includes the frequencies from 187 KHz to 191 KHz. The common lock frequency exists where condition F_{E} min - F_{S} max > 0 is satisfied. The control device 10 selects an intermediate frequency 189 KHz in the range 9 as the basic frequency of the broadest range 9, and stores the frequency 189 KHz in a register 6E.

The basic frequency 189 KHz can be locked or synchronized to the multiples of all the horizontal scan frequencies in range 9. That is, the AFC 3 can synchronize to the multiples of all the horizontal scan frequencies in the range 9.

The operation proceeds to block 306 in Figure 3 at which the control device 10 terminates the test period, and starts the display operation by positioning the switch 15 to the position P2 shown in the Figure 1.

In normal operation, the control device 10 uses the common or basic frequency, i.e. 189 KHz, stored in register 6E shown in the Figure 1 to control the frequency of the oscillator circuit 3A. The frequency of the oscillator circuit 3A is fixed to the basic frequency 189 KHz in normal operation. However, the frequency 189 KHz is modified to synchronize to the multiples of the horizontal scan frequencies.

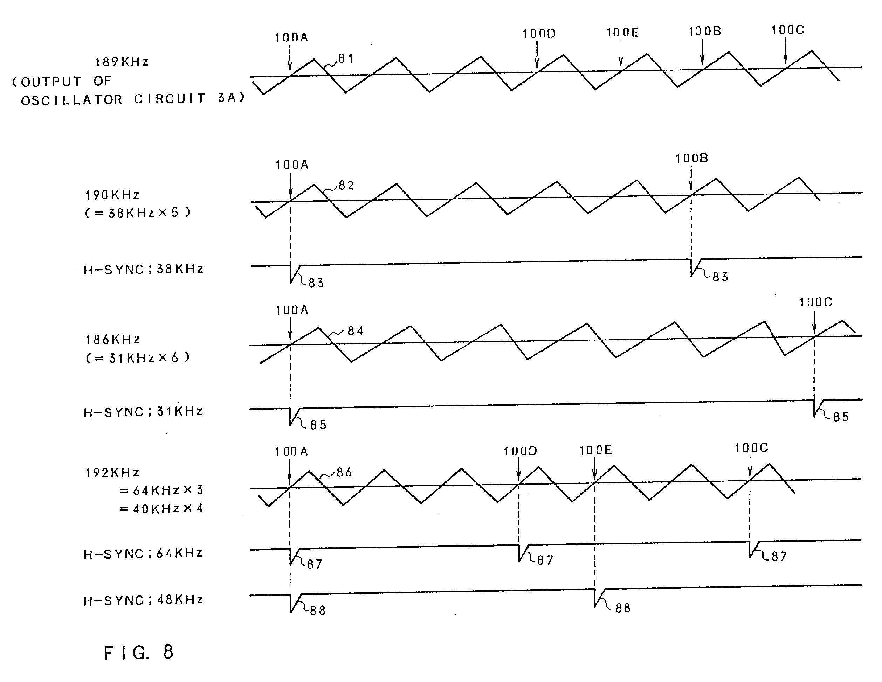

Figure 8 shows the sawtooth waveform 81 of the basic frequency 189 KHz generated by the oscillator circuit 3A and applied to the synchronous circuit 3B, and various sawtooth waveforms of the frequencies shifted or modified from the 189 KHz depending upon the frequency of the horizontal scan pulse train, i.e. 31 KHz, 38 KHz, 48 KHz or 64 KHz, applied from the display control circuit 1 to the waveform shaping circuit 2.

When, for example, the display control circuit 1 supplies the horizontal sync (H-SYNC) pulse train 83 of 38 KHz corresponding to character display mode of 1056 dots per line to the AFC 3 through the waveform shaping circuit 2, the AFC 3 automatically locks the frequency of the sawtooth waveform 81 to the frequency 190 KHz (= 38 KHz x 5) to generate the sawtooth waveform 82. That is, the AFC 3 modifies the sawtooth waveform 81 to the sawtooth waveform 82 so that the leading edges of the horizontal sync pulses 83 align with the middle points 100A and 100B of the positive-going portions of the sawtooth waveform 81, respectively.

The sawtooth waveform 82 of the frequency 190 KHz is supplied to the duty control circuit 7 through the switch 15 in the position P2. The duty control circuit 7 and the power control circuit 8 generate the switching pulses 39, as shown in the Figure 2, of the frequency 190 KHz for controlling the switching transistor 19 of the switching regulators.

When the display control circuit 1 supplies, for example, horizontal sync pulses 85 of 31 KHz, corresponding to a character display mode of 640 dots per line, to the AFC 3 through the waveform shaping circuit 2, the AFC 3 automatically locks the frequency of the sawtooth waveform 81 to the frequency 186 KHz (= 31 KHz x 6) to generate the sawtooth waveform 84. That is, the AFC 3 modifies the sawtooth waveform 81 to the sawtooth waveform 84 so that the leading edges of the horizontal sync pulses 85 align with the middle points 100A and 100C of the positive-going portions of the sawtooth waveform 81, respectively.

The sawtooth waveform 84 of the frequency 186 KHz is supplied to the duty control circuit 7 through the switch 15 in the position P2. The duty control circuit 7 and the power control circuit 8 generate the switching pulses of the frequency 186 KHz for controlling the switching transistor 19 of the switching regulators.

When, for example, the display control circuit 1 supplies the horizontal sync pulse train 87 of 64 KHz corresponding to a character display mode of 1280 dots per line to the AFC 3 through the waveform shaping circuit 2, the AFC 3 automatically locks the frequency of the sawtooth waveform 81 to the frequency 192 KHz (= 64 KHz x 3) to generate the sawtooth waveform 86. That is, the AFC 3 modifies the sawtooth waveform 81 to the sawtooth waveform 86 so that the leading edges of the horizontal sync pulses 87 align with the middle points 100, 100D and 100C of the positive-going portions of the sawtooth waveform 81, respectively.

The sawtooth waveform 86 of the frequency 192 KHz is supplied to the duty control circuit 7 through the switch 15 in the position P2. The duty control circuit 7 and the power control circuit 8 generate the switching pulses of the frequency 192 KHz for controlling the switching transistor 19 of the switching regulator.

When, for example, the display control circuit 1 supplies the horizontal sync pulse train 88 of 48 KHz corresponding to a character display mode of 1056 dots per line to the AFC 3 through the waveform shaping circuit 2, the AFC 3 automatically locks the frequency of the sawtooth waveform 81 to the frequency 192 KHz (= 48 KHz x 4) to generate the sawtooth waveform 86. That is, the AFC 3 modifies the sawtooth waveform 81 to the sawtooth waveform 86 so that the leading edges of the horizontal sync pulses 88 align with the middle points 100 and 100E of the positive-going portions of the sawtooth waveform 81, respectively.

The sawtooth waveform 86 of the frequency 192 KHz is supplied to the duty control circuit 7 through the switch 15 in the position P2. The duty control circuit 7 and the power control circuit 8 generate the switching pulses of the frequency 192 KHz for controlling the switching transistor 19 of the switching regulator.

The example of a power supply of the present invention hereinbefore described generates the switching pulses of the frequency 186 KHz, 190 KHz and 192 KHz in response to the horizontal sync pulse trains of the frequencies 31 KHz, 38 KHz, 48 KHz and 64 KHz, respectively. It will be appreciated that these frequencies of switching pulses for the switching regulator fall into very narrow range, i.e. 192 KHz - 186 KHz = 6 KHz.

Comparing the 6 KHz range covering 31 KHz, 38 KHz, 48 KHz and 64 KHz realised by the described example of present invention with the 51 KHz range covering only 31 KHz and 48 KHz realised by the prior art, it is apparent that the range of the switching frequencies supplied to the switching regulator can be remarkably narrowed by the present invention. It will be appreciated that the narrower the range of the switching frequencies is, the easier it is to design the power supply because the following parameters depend upon the range of the switching frequencies;
Core size of the switching transformer 20;
Switching speed range of the rectifying diode 21;
Capacitance and size of the smoothing capacitor 22, and Design of heat reduction of circuit components.

Furthermore the narrower range increased the total operational efficiency of the power supply device.

The embodiment of the power supply apparatus of the present invention hereinbefore described generates switching pulses of 186 KHz in response to a horizontal sync pulse train of 31 KHz, switching pulses of 190 KHz in response to a horizontal sync pulse train of 38 KHz, and switching pulses of 192 KHz in response to horizontal sync pulse trains of 48 KHz and 64 KHz, respectively. The multiplier 6 for the 31 KHz, 5 for the 38 KHz, 4 for the 48 KHz, and 3 for the 64 KHz are selected to provide the narrowest switching frequency range, i.e. the 6 KHz range. Selection of the switching frequency range is performed by block 305 in Figure 3.

If the display control circuit 1 has two horizontal sync modes of 31 KHz and 38 KHz, referring to Figure 5, the operation indicated by block 305 in Figure 3 selects the switching frequency 155 KHz for the 31 KHz horizontal sync pulse train and the switching frequency 152 KHz for the 38 KHz horizontal sync pulse train since the range 157 KHz - 150 KHz = 7 KHz is the broadest common lock range among the ranges for the horizontal synchronous pulse trains of 31 KHz and 38 KHz, as apparent from the Figure 5.

A basic frequency 153.5 KHz is selected, and modified to 155 KHz for 31 KHz and 152 KHz for 38 KHz. The basic frequency 153.5 KHz is stored in the register 6E as the frequency used for this particular combination of the horizontal sync pulse trains. The frequency 155 KHz of the switching pulses is N times (N is a positive integer, and N = 5) as large as the frequency 31 KHz of the horizontal sync pulse train, and the frequency 152 KHz of the switching pulses is M times (M is a positive integer, and M = 4) as large as the frequency 38 KHz of the horizontal sync pulse train. The multipliers, N = 5 and M = 4 are selected to provide the narrowest switching frequency range, i.e. 3 KHz.

The broadest range 9 is selected to give a large tolerance against the shift of the basic frequency due to the influence of temperature variation. This remarkably increases the stability of the power supply The wider the range 9, such as 4 KHz, is, the narrower is the resultant switching frequency range, such as 6 KHz, of the switching regulator.

As described above, the frequencies, for example, 31 KHz, 38 KHz, 48 KHz and 64 KHz of the horizontal sync pulse trains are stored in the register 6D in the initial set-up period, and the basic frequency 189 KHz for this particular combination of the horizontal sync pulse trains is selected and stored in the register 6E.

The basic frequency is selected depending upon the combination of the horizontal scan frequencies. Therefore, the control device 10 determined in each initial set-up period whether the frequencies of the horizontal sync pulse trains from the display control circuit 1 are equal to the frequencies stored in the register 6D. For example, suppose the frequencies stored in the register 6D are 31 KHz, 38 KHz, 48 KHz and 64 KHz, the frequency in the register 6E is 189 KHz, and a newly connected display control circuit 1 generates 31 KHz and 38 KHz, as described above. In this case, the old combination of 31 KHz, 38 KHz, 48 KHz and 64 KHz differs from the new combination of 31 KHz and 38 KHz. The control device 10, therefore, resets the old values in the registers 6D and 6E, and initiates the test operation shown in the Figure 3 to find out the new value 153.5 KHz for the new combination of 31 KHz and 38 KHz. The old value, 189 KHz in the register 6E is replaced by the new value, 153.5 KHz, and the old values 31 KHz, 38 KHz, 48 KHz and 64 KHz in the register 6D are replaced by the new values 31 KHz and 38 KHz.

In this manner, the control device 10 determines in the initial set-up period whether the frequencies of the horizontal synchronous pulse trains from the display control circuit 1 are equal to the frequencies stored in the register 6D. If they are, the control device 10 uses the frequency stored in the register 6E as the basic frequency without initiating the new test operation. Otherwise, the control device 10 resets the values in the registers 6D and 6E, and initiates the test operation to find out the new basic frequency for the new combination of the horizontal synchronous frequencies.

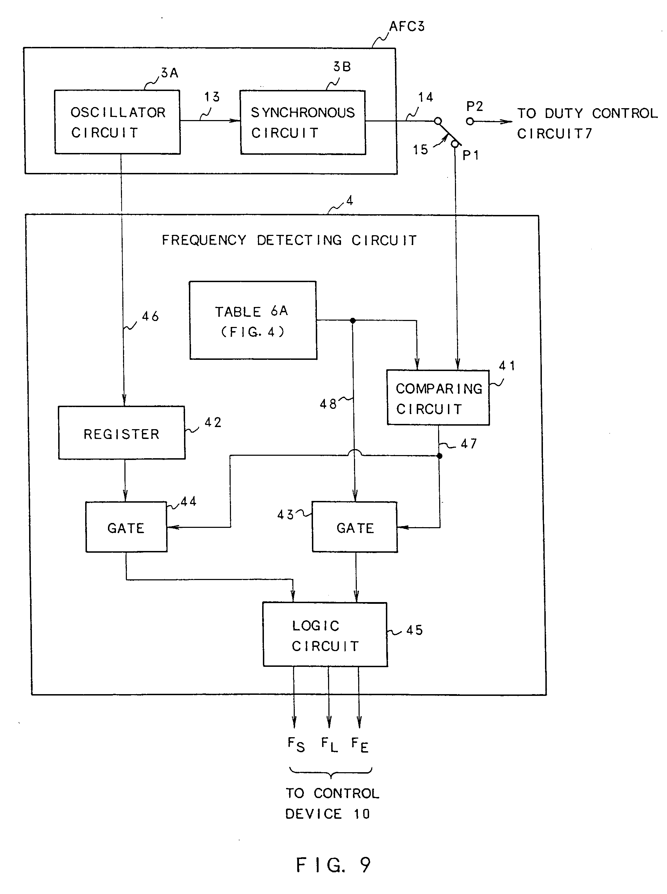

Referring to Figure 9, an embodiment of the frequency detecting circuit 4 includes a comparing circuit 41, a register 42, gates 43 and 44 and a logic circuit 45. In operation, if for example, the horizontal scan frequency is 31KHz as shown in as Figure 5, the oscillator circuit 3A gradually increases the frequency of the sawtooth waveform on the line 13 in the test period, as described hereinbefore. The oscillator circuit 3A also supplies a signal indicating the frequency to register 42 through a line 46. When the frequency exceeds 57 KHz, as shown in the Figure 5, the frequency of the sawtooth waveform on the output line 14 of the AFC 3 is locked to 62 KHz. This locked condition is detected by comparing circuit 41. More particularly, the multiples 62 KHz, 93 KHz, 124 KHz, 155 KHz, 186 KHz, 217 KHz and 248 KHz of 31 KHz stored in the Table 6A of Figure 4 are sequentially compared with the output frequency on the line 14 from the AFC 3. When the output frequency is equal to 62 KHz, the comparing circuit 41 generates a gate pulse on a line 47. The register 42 now stores a history frequency, such as 57 KHz in this case. The frequency 62 KHz is also supplied to the gate 43 through a line 48. Both the lock start frequency (F_{S}) 57 KHz and lock frequency (F_{L}) 62 KHz are supplied to the logic circuit 45 by the gate pulse on the line 47. The logic circuit 45 calculates the lock end frequency F_{E} 67 KHz by using the formula F_{E} = F_{L} + (F_{L} - F_{S}), and supplies the frequencies F_{S}, F_{L} and F_{E} to the control device 10, which stores these frequencies in the Table 6B shown in the Figure 6. The same operation as that described above is performed when the frequency of the oscillator circuit 3A exceeds each of the lock start frequencies (F_{S}) 88 KHz, 119 KHz, 150 KHz, 181 KHz, 212 KHz and 243 KHz, respectively, and Table 6B in Figure 6 is completed.

It will now be appreciated that a power supply of the present invention can be operated at multiples of plural horizontal scan frequencies, and also be synchronized to the plural horizontal scan frequencies.

Because the multiples (F_{L}) which are closest to each other are selected according to the formula F_{L} = F_{H} x N (F_{L} is the frequency of the horizontal synchronous pulse train, and N is a positive integer), the operational range of the connected switching regulator can be minimized. Several circuit parameters, hereinbefore described can therefore easily be selected to optimize the power supply performance for a range of horizontal scan frequencies. Moreover, the total efficiency of the power supply can be remarkably improved. Furthermore, its size can be reduced because the switching frequency is relatively high.

## Claims

1. A switch mode power supply comprisins:
an automatic frequency control circuit (AFC 3) including an oscillator (3a) for generating first and second drive signals and a synchronous circuit (3b) for locking the first second drive signals respectively to first and second input synchronisation signal when integer multiples of the respective frequencies of the first and second synchronisation signals are within a pull-in range of a centre frequency of the oscillator (3a), the first and second drive signals, when locked to the first and second synchronisation signals, having frequencies which are integer multiples of the respective frequencies of the first and second synchronisation signals;
a drive circuit (7) for generating first and second switching signals in response to the first and second drive signals respectively; and
a switching regulator (9) for generating one or more regulated power supply output voltages in response to the first and second switching signals;
characterised in that the power supply comprises a control circuit (4,6,10,15) for selecting, during a test period, the centre frequency of the oscillator (3a) such that, during subsequent operation of the power supply, the frequency range occupied by the first and second drive signals is narrower than the frequency range occupied by the first and second synchronisation signals, the control circuit (4,6,10) including:
means (6A,6D,10) for increasing the oscillator frequency through integer multiples of the frequencies of the first and second synchronisation signals;
a frequency detecting circuit (4) for determining the start frequency at which the automatic frequency control circuit (AFC 3) locks to the first and second synchronisation signals as the oscillator frequency is increased;
means (6A,6D,10) for determining the end frequencies at which the automatic frequency control circuit (AFC 3) unlocks from the first and second synchronisation signals as the oscillator frequency is increased;
means (6B,10) for selecting different groups of frequencies each containing determined start and end frequencie corresponding to the first and second synchronisation signals; means (6B,10) for determining the lowest end frequency and the highest start frequency in each group;
means (10) for subtracting the highest start frequency from the lowest end frequency in each group to generate a frequency range corresponding to each group;
means (6C,10) for determining the broadest positive range from the generated frequency ranges; and
means (6D,10) for setting the centre frequency of the oscillator to the frequency intermediate between the lowest end frequency and the highest start frequency corresponding to the broadest positive range.

2. A power supply as claimed in claim 1, wherein the control circuit (4,6,10,15) comprises a first register (6D) for storing the frequencies of the first and second sync signals from a synchronisation signal source (1).

3. A power supply as claimed in claim 2, wherein the control circuit (4,6,10,15) comprises reset means (6D,10) for comparing, during the test period, new frequencies corresponding to the first and second synchronisation signals received from the source with current frequencies stored in the first register (6A) and for replacing the current frequencies stored in the first register (6A) with the new frequencies if the new frequencies are different to the current frequencies.

4. A power supply as claimed in any preceding claim, wherein the control circuit (4,6,10,15) comprises a switch (15) for initially connecting the output of the automatic frequency control circuit (AFC 3) to the frequency detecting circuit and for subsequently connecting the output of the automatic frequency control circuit (AFC 3) to the drive circuit (7).

5. A power supply as claimed in any preceding claim, wherein the control circuit (4,6,10,15) comprises a first table (6A) for storing the integer multiples of the frequencies of the first and second synchronisation signals.

6. A power supply as claimed in any preceding claim, wherein the control circuit (4,6,10,15) comprises a second table (6B) for storing the start and end frequencies for the first and second synchronisation signals; a third table (6C) for storing the range corresponding to each group; and a second register (6D) for storing the frequency intermediate between the lowest end frequency and the highest start frequency corresponding to the broadest positive range.

7. A display device comprising a switch mode power supply as claimed in any preceding claim, the first and second synchronisation signals being horizontal picture synchronisation signals.

8. A method for operating a switch mode power supply, the method comprising:
generating first and second drive signals using an oscillator (3a);
locking the first and second drive signals respectively to first and second input synchronisation signals when integer multiples of the respective frequencies of the first and second sync signals are within a pull-in range of a centre frequency of the oscillator (3a), the first and second drive signals, when locked to the first and second synchronisation signals, having frequencies which are integer multiples of the respective frequencies of the first and second synchronisation signals;
generating first and second switching signals in response to the first and second drive signals respectively;
generating one or more regulated power supply output voltages in response to the first and second switching signals;
The method being characterised by selecting, during a test period, the centre frequency of the oscillator (3a) such that, during subsequent operation of the power supply, the frequency range occupied by the first and second drive signals is narrower than the frequency range occupied by the first and second synchronisation signals, by
increasing the oscillator frequency through integer multiples of the frequencies of the first and second synchronisation signals,
determining the start frequencies at which the first and second drive signals lock to the first and second synchronisation signals as the oscillator frequency is increased;
determining the end frequencies at which the first and second drive signals unlock from the first and second synchronisation signals as the oscillator frequency is increased;
selecting different groups of frequencies each containing determined start and end frequencies corresponding to the first and second synchronisation signals;
determining the lowest end frequency and the highest start frequency in each group;
subtracting the highest start frequency from the lowest end frequency in each group to generate a frequency range corresponding to each group;
determining the broadest positive range from the generated frequency ranges; and
setting the centre frequency of the oscillator (3a) to the frequency intermediate between the lowest end frequency and the highest start frequency corresponding to the broadest positive range.

## Patentansprüche

1. Ein Schaltnetzteil enthaltend:
Einen automatischen Frequenzregelungsschaltkreis (AFC 3) einschließlich eines Oszillators (3a) zum Generieren eines ersten und eines zweiten Steuersignals, und einen synchronen Schaltkreis (3b) zum Synchronisieren des ersten bzw. des zweiten Steuersignals mit einem ersten bzw. einem zweiten Eingangssynchronisations-Signals, wenn ganzzahlige Vielfache der entsprechenden Frequenzen des ersten bzw. des zweiten Synchronisationssignals innerhalb des Ansprechbereichs einer Mittenfrequenz des Oszillators (3a) liegen; wobei das erste bez. das zweite Steuersignal, wenn sie mit dem ersten bzw. dem zweiten Synchronisationssignal synchron sind, Frequenzen aufweisen, die ganzzahlige Vielfache der entsprechenden Frequenzen des ersten bzw. des zweiten Sync-Signals sind;
eine Steuerschaltung (7) zum Generieren eines ersten bzw. eines zweiten Schaltsignals als Reaktion auf das erste bzw. das zweite Steuersignal; und
einen Schaltregler (9) zum Generieren einer oder mehrerer geregelter Netzteilausgangsspannungen als Reaktion auf dieses erste bzw. zweite Schaltsignal;
dadurch gekennzeichnet, daß das Netzteil einen Steuerkreis (4, 6, 10, 15) zum Anwählen der Mittenfrequenz des Oszillators (3a) während einer Testperiode aufweist, so daß während des nachfolgenden Betriebs des Netzteils der vom ersten und vom zweiten Steuersignal besetzte Frequenzbereich enger ist als der vom ersten und vom zweiten Synchronisationssignal besetzte Frequenzbereich; wobei der Steuerschaltkreis (4, 6, 10) beinhaltet:
Mittel zum Erhöhen der Oszillatorfrequenz durch ganzzahlige Vielfache der Frequenzen des ersten und des zweiten Synchronisationssignals;
einen Frequenzerfassungsschaltkreis (4) zum Festlegen der Startfrequenzen, bei denen die automatische Frequenzregelungsschaltung (AFC 3) sich mit dem ersten und dem zweiten Synchronisationssignal synchronisiert, wenn sich die Oszillatorfrequenz erhöht;
Mittel (6A, 6D, 10) zum Festlegen der Endfrequenzen, bei denen die automatische Frequenzregelungsschaltung (AFC 3) sich aus dem ersten und dem zweiten Synchronisationssignal ausklinkt, wenn sich die Oszillatorfrequenz erhöht;
Mittel (6B, 10) zum Auswählen unterschiedlicher Frequenzgruppen, die jeweils vorgegebene Start- und Endfrequenzen entsprechend dem ersten und dem zweiten Synchronisationssignal enthalten; Mittel (6B, 10) zum Bestimmen der niedrigsten Endfrequenz und der höchsten Startfrequenz in jeder Gruppe;
Mittel (10) zum Abziehen der höchsten Startfrequenz von der niedrigsten Endfrequenz in jeder Gruppe, um einen entsprechenden Frequenzbereich in jeder Gruppe zu generieren;
Mittel (6C, 10) zum Festlegen des breitesten positiven Bereichs aus den generierten Frequenzbereichen; und
Mittel (6D, 10) zum Einstellen der Mittenfrequenz des Oszillators auf die Zwischenfrequenz zwischen der niedrigsten Endfrequenz und der höchsten Startfrequenz entsprechend dem breitesten positiven Bereich.

2. Ein Netzteil gemäß Anspruch 1, in dem die Steuerschaltung (4, 6, 10, 15) ein erstes Register (6D) zum Abspeichern der Frequenzen des ersten und des zweiten Synchronisationssignals aus einer Synchronisationssignalquelle (1) aufweist.

3. Ein Netzgerät gemäß Anspruch 2, in dem die Steuerschaltung (4, 6, 10, 15) Rückstellmittel (6D, 10) enthält zum Vergleichen neuer Frequenzen entsprechend dem ersten und dem zweiten Synchronisationssignal aus der Quelle mit den laufenden Frequenzen, die im ersten Register (6A) abgespeichert sind, während der Testperiode, und zum Ersetzen der laufenden, im ersten Register (6A) abgespeicherten Frequenzen durch die neuen Frequenzen, falls sich diese neuen Frequenzen von den laufenden Frequenzen unterscheiden.

4. Ein Netzgerät gemäß einem beliebigen der vorstehenden Ansprüche, in dem die Steuerschaltung (4, 6, 10, 15) einen Schalter (15) aufweist, der ursprünglich den Ausgang der automatischen Frequenzsteuerschaltung (AFC 3) mit der Frequenzerfassungsschaltung verbindet und anschließend den Ausgang der automatischen Frequenzsteuerschaltung (AFC 3) mit der Antriebsschaltung (7) verbindet.

5. Ein Netzgerät gemäß einem beliebigen der vorstehenden Ansprüche, in dem die Steuerschaltung (4, 6, 10, 15) eine erste Tabelle (6A) aufweist, um die ganzzahligen Vielfachen der Frequenzen des ersten und des zweiten Synchronisationssignals abzuspeichern.

6. Ein Netzgerät gemäß einem beliebigen der vorstehenden Ansprüche, in dem die Steuerschaltung (4, 6, 10, 15) eine zweite Tabelle (6B), um die Startfrequenz und die Endfrequenz für das erste und das zweite Synchronisationssignal abzuspeichern; eine dritte Tabelle (6C), um den jeder Gruppe entsprechenden Bereich abzuspeichern; und ein zweites Register (6D) zum Abspeichern der Zwischenfrequenz in der Mitte zwischen der niedrigsten Endfrequenz und der höchsten Startfrequenz entsprechend dem breitesten positiven Bereich abzuspeichern, enthält.

7. Eine Anzeigevorrichtung, enthaltend ein Schaltnetzteil gemäß einem beliebigen der vorstehenden Ansprüche, wobei das erste und das zweite Synchronisationssignal horizontale Bildsynchronisationssignale sind.

8. Ein Verfahren zum Betreiben eines Schaltnetzteils, wobei dieses Verfahren beinhaltet:
Das Generieren eines ersten und eines zweiten Steuersignals durch Einsatz eines Oszillators (3a);
Synchronisieren des ersten und des zweiten Steuersignals entsprechend mit einem ersten bzw. einem zweiten Eingangs-Synchronisationssignal, sobald ganzzahlige Vielfache der entsprechenden Frequenzen des ersten bzw. des zweiten Sync-Signals innerhalb des Ansprechbereichs einer Mittenfrequenz des Oszillators (3a) liegen, wobei das erste und das zweite Steuersignal, wenn sie synchron mit dem ersten bzw. dem zweiten Synchronisationssignal laufen, Frequenzen aufweisen, die ganzzahlige Vielfache der entsprechenden Frequenzen des ersten bzw. des zweiten Synchronisationssignals sind;
Generieren eines ersten und eines zweiten Schaltsignals als Reaktion auf das erste bzw. das zweite Steuersignal;
Generieren einer oder mehrerer geregelter Netzteilausgangsspannungen als Reaktion auf das erste bzw. das zweite Schaltsignal;
wobei das verfahren gekennzeichnet ist durch
Wählen der Mittenfrequenz des Oszillators (3a) während einer Testperiode so, daß während des nachfolgenden Betriebs des Netzteils der vom ersten und zweiten Steuersignal besetzte Frequenzbereich enger als der vom ersten und vom zweiten Synchronisationssignal besetzte Frequenzbereich;
Erhöhen der Oszillatorfrequenz um ganzzahlige Vielfache der Frequenzen des ersten und des zweiten Synchronisationssignals,
Festlegen der Startfrequenzen, an denen sich das erste und das zweite Steuersignal mit dem ersten und dem zweiten Synchronisationssignal synchronisiert, wenn sich die Oszillatorfrequenz erhöht;
Festlegen der Endfrequenzen, an denen das erste und das zweite Steuersignal sich vom ersten und zweiten Synchronisationssignal ausklinkt, wenn die Oszillatorfrequenz zunimmt;
Auswählen unterschiedlicher Gruppen, die jeweils bestimmte Start- und Endfrequenzen enthalten, die dem ersten bzw. dem zweiten Synchronisationssignal entsprechen;
Festlegen der untersten Endfrequenz und der höchsten Startfrequenz in jeder Gruppe;
Abziehen der höchsten Startfrequenz von der niedrigsten Endfrequenz in jeder Gruppe, um einen den einzelnen Gruppen entsprechenden Frequenzbereich zu generieren;
Festlegen des breitesten Bereichs aus den generierten Frequenzbereichen; und
Einstellen der Mittenfrequenz des Oszillators (3a) auf die Zwischenfrequenz zwischen der niedrigsten Endfrequenz und der höchsten Startfrequenz, die dem breitesten positiven Bereich entspricht.

## Revendications

1. Alimentation à découpage comprenant:
une unité de commande automatique de fréquence (CAF 3) comprenant un oscillateur (3a) pour générer un premier et un deuxième signal d'attaque et un circuit synchrone (3b) pour asservir respectivement le premier et le deuxième signal d'attaque à un premier et un deuxième signal de synchronisation lorsque des multiples entiers des fréquences respectives du premier et du deuxième signal de synchronisation sont dans une plage de synchronisation d'une fréquence centrale de l'oscillateur (3a), le premier et le deuxième signal d'attaque, lorsqu'ils sont asservis au premier et au deuxième signal de synchronisation, ayant des fréquences qui sont des multiples entiers des fréquences respectives du premier et du deuxième signal de synchronisation;
un circuit d'attaque (7) pour générer un premier et un deuxième signal de découpage en réponse au premier et au deuxième signal d'attaque, respectivement; et
un régulateur à découpage (9) pour générer une ou plusieurs tensions de sortie d'alimentation en réponse au premier et au deuxième signal de découpage;
caractérisée en ce que l'alimentation comprend un circuit de commande (4,6,10,15) pour sélectionner, au cours d'une période de contrôle, la fréquence centrale de l'oscillateur (3a) de sorte que, au cours du fonctionnement suivant de l'alimentation, la gamme de fréquences occupée par le premier et le deuxième signal d'attaque soit plus étroite que la gamme de fréquences occupée par le premier et le deuxième signal de synchronisation, le circuit de commande (4,6,10) comprenant:
un dispositif (6A,6D,10) pour accroître la fréquence d'oscillateur par multiples entiers des fréquences du premier et du deuxième signal de synchronisation;
un circuit de détection de fréquences (4) pour déterminer les fréquences initiales auxquelles la commande automatique de fréquence (CAF 3) asservit au premier et au deuxième signal de synchronisation au fur et à mesure que la fréquence d'oscillateur est augmentée;
un dispositif (6A,6D,10) pour déterminer les fréquences finales auxquelles le commande automatique de fréquence (CAF 3) désasservit du premier et du deuxième signal de synchronisation au fur et à mesure que la fréquence d'oscillateur est augmentée;
un dispositif (6B,10) pour sélectionner différents groupes de fréquences contenant des fréquences initiales et finales déterminées correspondant au premier et au deuxième signal de synchronisation;
un dispositif (6B,10) pour déterminer la plus basse fréquence finale et la plus haute fréquence initiale dans chaque groupe;
un dispositif (10) pour soustraite la plus haute fréquence initiale de la plus basse fréquence finale dans chaque groupe pour générer une gamme de fréquences correspondant à chaque groupe;
un dispositif (6C,10) pour déterminer la gamme positive la plus large à partir des gammes de fréquences générées; et
un dispositif (6D,10) pour établir la fréquence centrale de l'oscillateur à la fréquence intermédiaire entre la plus basse fréquence finale et la plus haute fréquence initiale correspondant à la gamme positive la plus large.

2. Alimentation selon la revendication 1, dans laquelle le circuit de commande (4,6,10,15) comprend un premier registre (6D) pour enregistrer les fréquences du premier et du deuxième signal de synchronisation provenant d ' une source de signaux de synchronisation (1).

3. Alimentation selon la revendication 2, dans laquelle le circuit de commande (4,6,10,15) comprend un dispositif de restauration (6D,10) pour comparer, au cours de la période de contrôle, les nouvelles fréquences correspondant au premier et au deuxième signal de synchronisation en provenance de la source avec les fréquences actuellement enregistrées dans le premier registre (6D) et pour remplacer les fréquences actuellement enregistrées dans le premier registre (6D) par les nouvelles fréquences lorsque les nouvelles fréquences sont différentes des fréquences enregistrées.

4. Alimentation selon l'une quelconque des revendications précédentes, dans laquelle le circuit de commande (4,6,10,15) comprend un interrupteur (15) pour connecter initialement la sortie de la commande automatique de fréquence (CAF 3) au circuit de détection de fréquences et pour connecter ensuite la sortie de la commande automatique de fréquence (CAF 3) au circuit d'attaque (7).

5. Alimentation selon l'une quelconque des revendications précédentes, dans laquelle le circuit de commande (4,6,10,15) comprend une première table (6A) pour mémoriser les multiples entiers des fréquences du premier et du deuxième signal de synchronisation.

6. Alimentation selon l'une quelconque des revendications précédentes, dans laquelle le circuit de commande (4,6,10,15) comprend une seconde table (6B) pour mémoriser les fréquences initiales et finales pour le premier et le deuxième signal de synchronisation; une troisième table (6C) pour mémoriser la gamme correspondant à chaque groupe; et un deuxième registre (6E) pour enregistrer la fréquence intermédiaire entre la plus basse fréquence finale et la plus haute fréquence initiale correspondant à la gamme positive la plus large.

7. Visuel comprenant une alimentation à découpage selon l'une quelconque des revendications précédentes, le premier et le deuxième signal de synchronisation étant des signaux de synchronisation des lignes de trame.

8. Procédé pour exploiter une alimentation à découpage, comprenant les étapes consistant à :
générer un premier et un deuxième signal d'attaque en utilisant un oscillateur (3a);
asservir respectivement le premier et le deuxième signal d'attaque à un premier et un deuxième signal de synchronisation lorsque des multiples entiers des fréquences respectives du premier et du deuxième signal de synchronisation sont dans une plage de synchronisation d'une fréquence centrale de l'oscillateur (3a), le premier et le deuxième signal d'attaque, lorsqu'ils sont asservis au premier et au deuxième signal de synchronisation, ayant des fréquences qui sont des multiples entiers des fréquences respectives du premier et du deuxième signal de synchronisation;
générer un premier et un deuxième signal de découpage en réponse au premier et au deuxième signal d'attaque, respectivement;
générer une ou plusieurs tensions de sortie d'alimentation en réponse au premier et au deuxième signal de découpage;
le procédé étant caractérisé en ce qu'il comprend, de plus, l'étape consistant à:
sélectionner, au cours d'une période de contrôle, la fréquence centrale de l'oscillateur (3a) de sorte que, au cours du fonctionnement suivant de l'alimentation, la gamme de fréquences occupée par le premier et le deuxième signal d'attaque soit plus étroite que la gamme de fréquences occupée par le premier et le deuxième signal de synchronisation, en:
faisant croître la fréquence d'oscillateur par multiples entiers des fréquences du premier et du deuxième signal de synchronisation;
déterminant les fréquences initiales auxquelles le premier et le deuxième signal d'attaque sont asservis au premier et au deuxième signal de synchronisation au fur et à mesure que la fréquence d'oscillateur est augmentée;
déterminer les fréquences finales auxquelles le premier et le second signal d'attaque sont désasservis du premier et du deuxième signal de synchronisation au fur et à mesure que la fréquence d'oscillateur est augmentée;
sélectionner différents groupes de fréquences contenant des fréquences initiales et finales déterminées correspondant au premier et au deuxième signal de synchronisation;
pour déterminer la plus basse fréquence finale et la plus haute fréquence initiale dans chaque groupe;
soustraire la plus haute fréquence initiale de la plus basse fréquence finale dans chaque groupe pour générer une gamme de fréquences correspondant à chaque groupe;
déterminer la gamme positive la plus large à partir des gammes de fréquences générées; et
établir la fréquence centrale de l'oscillateur (3a) à la fréquence intermédiaire entre la plus basse fréquence finale et la plus haute fréquence initiale correspondant à la gamme positive la plus large.
